(19) Europäisches Patentamt
European Patent Office
Office européen des brevets

(11) Veröffentlichungsnummer: **0 061 109 B1**

(12) # EUROPÄISCHE PATENTSCHRIFT

(45) Veröffentlichungstag der Patentschrift: **17.04.85**

(51) Int. Cl.⁴: **C 09 J 3/14**, C 08 F 20/28

(21) Anmeldenummer: **82102050.0**

(22) Anmeldetag: **13.03.82**

(54) **Klebstoffe und Dichtungsmassen.**

(30) Priorität: **21.03.81 DE 3111133**

(43) Veröffentlichungstag der Anmeldung: **29.09.82 Patentblatt 82/39**

(45) Bekanntmachung des Hinweises auf die Patenterteilung: **17.04.85 Patentblatt 85/16**

(84) Benannte Vertragsstaaten: **AT BE CH DE FR GB IT LI NL SE**

(56) Entgegenhaltungen:
**DE - A - 2 048 610**
**US - A - 2 833 753**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Gruber, Werner, Dr., Franz-Kremer-Strasse 7, D-4052 Korschenbroich (DE)**

**EP 0 061 109 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung bezieht sich auf lagerstabile, bei Ausschluß von Sauerstoff beschleunigt erhärtende, von Peroxiden und Hydroperoxiden freie Systeme auf Basis von Estern der Methacrylsäure und/oder Acrylsäure, die sich zur Verbindung und Abdichtung, insbesondere metallischer Flächen, eignen.

Es ist ein Verfahren zur Herstellung von lagerbeständigen Klebstoffen auf Basis von Methacrylsäureestern bekannt, bei dem der monomere Ester in Gegenwart eines Inhibitors zusammen mit einem Chelatbildner sowie Benzoesäuresulfimid und einem tertiären Amin so lange erhitzt wird, bis der Gehalt an aktivem Sauerstoff mindestens 25 ppm beträgt. Zwar ist es nicht erforderlich, das Verfahren mit konstantem Durchleiten von gasförmigem Sauerstoff durch den Klebstoff während dessen Herstellung durchzuführen, aber es sind doch verhältnismäßig lange Zeiträume erforderlich, um brauchbare Mischungen zu erhalten. Es ist weiter möglich, anaerob härtende Mischungen auf Basis von Methacrylsäureestern unter Verwendung von $\alpha$-Aminosulfonen herzustellen, doch führt hier nur der Zusatz von Dialkylperoxiden zu technisch brauchbaren Mischungen. Auch war die Verwendung von Perbenzoesäureestern als Zusatz zu anaeroben Klebmitteln aus der DE-OS 2 048 610 bekannt. Diese werden aber erst durch Umwandlung in Hydroperoxide wirksam (Seite 6, Zeile 7). Der Einsatz freier Percarbonsäure in der Kombination der Erfindung wird damit nicht nahegelegt.

Aufgabe der vorliegenden Erfindung war es daher, solche lagerstabilen Mischungen auf Basis von (Meth)acrylsäureestern zu finden, die unter anaeroben Bedingungen rasch aushärten und keine Peroxide enthalten. Auch sollen sie durch einfaches Mischen der Bestandteile sofort gebrauchsfertige Klebstoffe und Dichtungsmittel ergeben.

Die erfindungsgemäßen Systeme sind nun gekennzeichnet durch einen Gehalt an

a) 0,2 bis 10 Gewichtsteilen wenigstens einer HN-aciden Verbindung,
b) 0,2 bis 5 Gewichtsteilen eines tertiären Amins und/oder verschiedener tertiären Amine, die wenigstens einmal einen aromatischen Ring am Stickstoff haben, sowie
c) 0,1 bis 5 Gewichtsteilen einer organischen Percarbonsäure

jeweils bezogen auf 100 Gewichtsteile des polymerisierbaren Materials.

Als tertiäre Amine sind solche mit den verschiedensten aromatischen und aliphatischen Substituenten beziehungsweise ihre Gemische geeignet. Die Aryl- beziehungsweise Alkyl- beziehungsweise Alkarylgruppen können ihrerseits weiter substituiert sein, zum Beispiel mit Halogen, insbesondere Chlor, oder Nitrogruppen oder auch Sulfonsäurehydrazid- oder Carbonsäurehydrazid- und Sulfimidgruppen. Bevorzugte tertiäre Amine enthalten etwa die Struktur

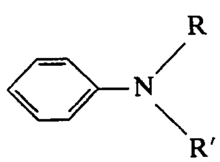

wobei der aromatische Rest auch noch substituiert sein kann, und R beziehungsweise R' einen Alkylrest mit 1 bis 12 Kohlenstoffatomen bedeutet. Gute Resultate können erzielt werden mit Aminen wie N,N-Dimethylanilin, N,N-Dimethyltoluidin, Chlor-N,N-dimethylanilin, N-Methyl-N-propylanilin, N,N-Dimethylnaphthylamin, oder auch N,N,N',N'-Tetramethylphenylendiamin.

Als organische Persäuren kommen prinzipiell alle in Frage, die sich im System aus (Meth)acrylsäureester hinreichend lösen. Sie können sich sowohl von aliphatischen als auch von aromatischen Mono-, Di- und/oder Tricarbonsäuren ableiten und weitere Substituenten wie Halogen oder Nitrogruppen enthalten. Aus praktischen Erwägungen sind als bevorzugt anzusehen die Peressigsäure, Perpropionsäure, Perameisensäure, Perbenzoesäure und Chlorperbenzoesäure. Auch hat es sich bewährt, den Systemen nicht die reinen Persäuren, sondern ihre Lösungen in geeigneten Lösungsmitteln zuzufügen. Beispielsweise kann hier Eisessig oder wasserfreie Ameisen- oder Propionsäure als Lösungs- beziehungsweise Verdünnungsmittel dienen.

Nach einer vorteilhaften Ausführungsform enthalten die erfindungsgemäßen anaeroben Systeme Sulfonsäure- und/oder Carbonsäurehydrazide und/oder Sulfimide und/oder Acylcyanamide und/oder Disulfonylimide als HN-acide Verbindungen.

Geeignete Sulfonsäurehydrazide leiten sich beispielsweise von Benzolsulfonsäure, o- und p-Toluolsulfonsäure, $\alpha$- und $\beta$-Naphthalinsulfonsäure, p-Chlorbenzolsulfonsäure, p-Brombenzolsulfonsäure und dergleichen mehr ab. Auch die Hydrazide von Cyclohexylsulfonsäuren, Camphersulfonsäure, Hexadecansulfonsäure können eingesetzt werden.

Ferner können die Sulfonsäurehydrazide am Stickstoff substituiert sein, beispielsweise durch Alkylgruppen, Cycloalkylgruppen oder durch aromatische Reste wie dem Phenylrest. Beispiele für geeignete Sulfonsäurehydrazide sind:

N,N-Dimethyl-N'-benzolsulfonsäurehydrazid,
N-Methyl-N'-benzolsulfonsäurehydrazid,
N-Methyl-N'-p-toluolsulfonsäurehydrazid,
N,N-Dimethyl-N'-p-toluolsulfonsäurehydrazid,
N-Isopropyl-N'-p-toluolsulfonsäurehydrazid,
N-Cyclohexyl-N'-p-toluolsulfonsäurehydrazid,
N,N-Di-n-butyl-N'-p-toluolsulfonsäurehydrazid,
N-n-Hexyl-N'-p-chlorbenzolsulfonsäurehydrazid,
N,N-Diethyl-N'-p-chlorbenzolsulfonsäurehydrazid.

Als Carbonsäurehydrazide kommen solche in Frage, die sich ableiten von Carbonsäuren wie etwa Essigsäure, Propionsäure, Benzoesäure, Cyclohexancarbonsäure, Cyclohexandicarbonsäure, Bernsteinsäure, Sebacinsäure. Mit gutem Erfolg lassen sich auch verwenden die Carbazide sowohl des Ethylesters als auch des tert.-Butylesters der Kohlensäure.

Unter den Sulfimiden ist das Benzoesäuresulfimid am wirksamsten.

Die einsetzbaren Disulfonylimide entsprechen der allgemeinen Formel

$$R-SO_2-NH-SO_2-R'$$

wobei R und R' für einen Alkyl-, Cycloalkyl- oder einen Arylrest stehen.

Geeignete Disulfonylamide leiten sich beispielsweise ab von Benzolsulfonsäure, p-Chlorbenzolsulfonsäure, Dichlorbenzolsulfonsäure, Toluolsulfonsäure, den isomeren Xylolmonosulfonsäuren, $\alpha$- oder $\beta$-Naphthalinsulfonsäure, Methoxy- oder Propoxybenzolsulfonsäuren, Diphenylsulfonsäure, Cumolsulfonsäure.

Als Acylcyanamide sind alle Verbindungen brauchbar, sofern sie in den Monomeren in hinreichender Menge löslich sind. Es kommen die folgenden Acylcyanamide in Betracht: Acetylcyanamid, Propionylcyanamid, n-Butyrylcyanamid, iso-Butyrylcyanamid, Lauroylcyanamid, Myristoylcyanamid, Stearoylcyanamid, Benzoylcyanamid, Naphtholoylcyanamid, Toluylcyanamid, Acylgruppen können auch sein die Nicotinylgruppe, Phenylacetylgruppe, Dichlorphenylacetylgruppe, Brom- oder Chloracetylgruppe, p-Methylphenylacetylgruppe, p-Nitrophenylpropionylgruppe und 4-Chlor-(brom)butionylgruppe.

Fakultativ kann zusätzlich ein aliphatisches Amin als Hilfsbeschleuniger zusammen mit den erfindungsgemäß einzusetzenden aromatischen Aminen verwendet werden. In diesem Zusammenhang sei Tri-n-butylamin erwähnt. Es soll nur in sehr kleinen Mengen von 0,1 oder bis zu 2,5 Gewichtsprozent verwendet werden.

Die erfindungsgemäß einzusetzenden Wirkstoffe lassen sich prinzipiell in allen Monomeren einsetzen, die für die Herstellung sogenannter anaerob härtender Klebstoffe und Dichtungsmassen geeignet sind.

Als Basis für derartige Systeme sind geeignet (Meth)acrylsäureester von ein- und mehrwertigen Alkoholen wie Methanol, Ethanol, Hexanol, Decanol, Ethylenglykol, Diethylenglykol, Triethylenglykol, Tetraethylenglykol, Polyethylenglykol, Glycerin, Pentandiol, Di-, Tri- oder Tetrapropylenglykol oder auch (Meth)acrylsäureester von dimerisiertem oder polymerisiertem Cyclopentadien oder von Tetrahydrofurfurylalkohol oder Furfurylalkohol. Auch sind noch freie Hydroxylgruppen enthaltende (Meth)acrylsäureester brauchbar wie Hydroxyethylmethacryl- oder Glycerinmono- oder -dimethacrylsäureester.

Als Monomere sind weiterhin geeignet die Dimethacrylsäureester des Bis-(ethylenglykol)adipats oder des Maleats oder des Phthalats. Auch die Dimethacrylsäureester des Bis-(diethylenglykol)maleats des Bis-(tetraethylenglykol)-phthalats oder des Bis-(triethylenglykol)sebazats sind geeignete Monomere.

Eine geeignete Basis stellen weiterhin die Umsetzungsprodukte von Diisocyanaten mit Hydroxyalkylmethacrylaten oder Aminoalkylmethacrylaten dar. Dabei handelt es sich um niedermolekulare Polyurethane und Polyharnstoffe mit endständigen Methacrylsäureestergruppierungen. Der Alkylrest kann zwischen etwa 2 und 18 Kohlenstoffatome aufweisen und auch cyclisch sein, wie etwa der Cyclohexylrest. Auch ist es möglich, anstelle des Alkylrestes einen aromatischen Rest zu haben. Erwähnenswert sind auch in diesem Zusammenhang die Reaktionsprodukte aus aromatischen Isocyanaten wie dem Toluylendiisocyanat, dem Diphenylmethandiisocyanat oder auch dem Isophorondiisocyanat mit Hydroxyethylmethacrylsäureester oder Hydroxypropylmethacrylsäureester.

Eine geeignete Basis für die bei Ausschluß von Sauerstoff beschleunigt erhärtenden Systeme gemäß der Erfindung sind auch die Methacrylate oder Acrylate, die sich durch Umsetzung von Methacrylsäure beziehungsweise Acrylsäure oder deren Estern mit Diphenylolpropan ableiten. Auch können derartige Umsetzungsprodukte von anderen bifunktionellen Phenolen verwendet werden. In vielen Fällen werden die genannten Phenole vor der Umsetzung mit Methacrylsäure beziehungsweise Acrylsäure mit 2 bis 10 Mol Ethylenoxid beziehungsweise Propylenoxid zur Reaktion gebracht.

Ferner sind eine brauchbare Basis für die erfindungsgemäßen Systeme, die Dimethacrylsäureester von Halbestern aus Diolen und Carbonsäureanhydriden mit Glycidylmethacrylat. Zur Herstellung dieser Verbindungen setzt man zunächst Diole wie Ethylenglykol, Diethylenglykol, Propylenglykol, Butandiol-1,4, Hexandiol-1,6 oder Oxystearylalkohol mit den Anhydriden von Carbonsäuren wie Bernsteinsäureanhydrid, Maleinsäureanhydrid oder Phthalsäureanhydrid zu den Halbestern um. Die noch freien Carboxylgruppen werden dann mit Glycidylmethacrylat in die Methacrylsäureester überführt.

Schließlich sind erwähnenswert die Dimethacrylsäureester, welche sich ableiten vom Bis-(hydroxymethyl)tricyclodecan.

Selbstverständlich werden diese Monomeren im allgemeinen nicht allein eingesetzt, sondern Mischungen von ihnen, um optimale Festigkeitswerte und Härtungszeiten zu erhalten. In der Praxis hat sich ein Abmischen mit Hydroxyalkylmethacrylsäureester bewährt.

Den erfindungsgemäßen Klebstoffen und Dichtungsmassen können auch Verdickungsmittel, Weichmacher, anorganische Füllstoffe und Farbstoffe zugesetzt werden. Als Verdickungsmittel sind geeignet polymere Verbindungen, wie etwa Polymethylmethacrylat, Polyethylacrylat, Polystyrol, Polyvinylchlorid, synthetischer Kautschuk und dergleichen. Als Füllstoffe eignen sich beispielsweise feinverteiltes Siliciumdioxid, Silikate, Bentonite, Calciumcarbonat, Titandioxid.

Die neuen Systeme können in der Technik Anwendung zum Verkleben von Blechen beziehungsweise Teilen aus verschiedensten Legierungen, reinen Metallen oder vorbehandelten metallischen Werkstoffen zur Befestigung von Gewinden und zum Abdichten von Rohrverbindungen finden. Selbstverständlich ist es möglich, auch mit bekannten Hilfsmitteln, beispielsweise durch geringes Erwärmen, die Aushärtung zu beschleunigen.

Die neuen anaerob härtenden Klebstoffe werden untersucht auf:

A) Handfestigkeit,
B) Festigkeit nach 60 Minuten und 24 Stunden,
C) Stabilität.

## A) Handfestigkeitsprüfung

Bei der Handfestigkeitsprüfung werden mehrere Tropfen der anaerob härtenden Masse auf die Gewindegänge einer entfetteten Messingschraube (M 10 × 30 DIN 933) aufgebracht und anschließend mit der dazugehörenden Mutter zusammengebracht. Von Zeit zu Zeit wird die Mutter etwas gegen die Schraube gedreht, um festzustellen, von welcher Zeit an die Mutter sich nicht mehr ohne besondere Kraftanstrengung von Hand auf der Schraube drehen läßt. Die bis dahin verstrichene Zeitspanne wird als Maß für die Handfestigkeit angesehen.

## B) Festigkeit nach 60 Minuten und 24 Stunden

An verklebten Eisenschrauben und Muttern wurde nach 60minütiger und 24stündiger Lagerung bei Raumtemperatur mittels eines Drehmomentschlüssels die Drehkraft im Nm bestimmt, die zum Aufdrehen der Klebung benötigt wird.

## C) Stabilität

Bei der Stabilitätsprüfung wurde ein 10 cm langes und 10 mm weites Reagenzglas zu $^9/_{10}$ mit den Mischungen gefüllt und in ein auf 80° C gehaltenes Bad eingehängt. Die Zeitspanne vom Einhängen bis zur ersten Gelbildung wurde gemessen. Sie lag in allen Fällen über 1 Stunde und entspricht erfahrungsgemäß einer Lagerfähigkeit von mehr als 1 Jahr bei Zimmertemperatur.

## Beispiele 1 bis 5

Auf jeweils 100 Gewichtsteile Triethylenglykoldimethacrylat wurden die in der nachfolgenden Tabelle 1 aufgeführten Zusätze gegeben. Die Zahlen bedeuten Gewichtsteile.

Tabelle 1

| Zusatz | Nummer der Beispiele 1 | 2 | 3 | 4 | 5 |
|---|---|---|---|---|---|
| p-Toluolsulfonsäurehydrazid | 1 | – | – | 1 | 0,5 |
| Benzoesäuresulfimid | 1 | 1 | – | – | 0,5 |
| Benzoylcyanamid | – | – | 1 | 1 | – |
| N,N-Dimethyl-p-toluidin | 1 | 1 | 1 | 1 | 0,5 |
| Peressigsäure (40%ig in Essigsäure) | 1 | 1 | 1 | 1 | 0,5 |

In der nachfolgenden Tabelle 2 ist die Handfestigkeit in Minuten, die gefundene Festigkeit nach 60 Minuten und 24 Stunden in Abhängigkeit von der laufenden Nummer des Beispiels wiedergegeben.

Tabelle 2

| | Beispiel 1 | 2 | 3 | 4 | 5 |
|---|---|---|---|---|---|
| Aushärtezeit | | | | | |
| Handfestigkeit (min) | 1 | 2 | 5 | 3 | 5 |
| 1 Stunde (Nm) | 38 | 30 | 10 | 20 | 30 |
| 24 Stunden (Nm) | 45 | 40 | 40 | 45 | 55 |

Beispiele 6 bis 9

In der nachfolgenden Tabelle 3 ist die Zusammensetzung von verschiedenen erfindungsgemäßen Mischungen wiedergegeben. Die Zahlen in Abhängigkeit von den Nummern des Beispiels sind Gewichtsteile.

Tabelle 3

| | Nummer der Beispiele 6 | 7 | 8 | 9 |
|---|---|---|---|---|
| Triethylenglykoldimethacrylat | 97 | 97 | 98,5 | 97,5 |
| p-Toluolsulfonsäurehydrazid | 1 | 0,5 | – | – |
| Benzoesäuresulfimid | 1 | 0,5 | 0,5 | 0,5 |
| N,N-Dimethyl-p-toluidin | 0,5 | 1 | 0,5 | 1 |
| Peressigsäure (40%ig in Essigsäure) | 0,5 | 1 | 0,5 | 1 |

In der nachfolgenden Tabelle 4 sind wieder in Abhängigkeit von der Nummer des Beispiels die Aushärtezeit in Minuten bis zum Erreichen der Handfestigkeit und die nach 1 und 24 Stunden gefundenen Drehmomente wiedergegeben.

Tabelle 4

| | Nummer der Beispiele 6 | 7 | 8 | 9 |
|---|---|---|---|---|
| Aushärtezeit (min) | 1 | 10 | 5 | 10 |
| 1 Stunde (Nm) | 45 | 20 | 20 | 20 |
| 24 Stunden (Nm) | 60 | 55 | 40 | 40 |

Beispiele 10 bis 13

In der nachfolgenden Tabelle 5 ist die Zusammensetzung von erfindungsgemäßen Mischungen wiedergegeben, wobei die Zahlen in Akbhängigkeit von den Nummern der Beispiele Gewichtsteile bedeuten.

Tabelle 5

| | Nummer der Beispiele 10 | 11 | 12 | 13 |
|---|---|---|---|---|
| Dimethacrylat eines propoxylierten Diphenylolpropans | 48 | 30 | 48 | 60 |
| Hydroxyethylmethacrylat | 48 | 68 | — | — |
| Triethylenglykoldimethacrylat | — | — | 48 | 48 |
| p-Toluolsulfonsäurehydrazid | 1 | 0,5 | 1 | 0,5 |
| Benzoesäuresulfimid | 1 | 0,5 | 1 | 0,5 |
| N,N-Dimethyl-p-toluidin | 1 | 0,5 | 1 | 0,5 |
| Peressigsäure (40%ig in Essigsäure) | 1 | 0,5 | 1 | 0,5 |

In der nachfolgenden Tabelle 6 sind in Abhängigkeit von den Nummern der Beispiele die Aushärtezeit bis zum Erreichen der Handfestigkeit und die nach 1 beziehungsweise 24 Stunden gefundenen Drehmomente wiedergegeben.

Tabelle 6

| | Nummer der Beispiele 10 | 11 | 12 | 13 |
|---|---|---|---|---|
| Aushärtezeit (min) | 1 | 2 | 2 | 3 |
| 1 Stunde (Nm) | 40 | 30 | 41 | 32 |
| 24 Stunden (Nm) | 58 | 60 | 55 | 50 |

Beispiele 14 bis 17

In der nachfolgenden Tabelle 7 ist die Zusammensetzung von erfindungsgemäßen Mischungen wiedergegeben, wobei die Zahlen in Abhängigkeit von den Nummern der Beispiele Gewichtsteile bedeuten.

Tabelle 7

| | Nummer der Beispiele 14 | 15 | 16 | 17 |
|---|---|---|---|---|
| Dimethacrylat des Dimethyloltricyclodecans | 50 | 50 | — | — |
| Diurethan aus 1 Mol Diphenylmethandiisocyanat und 2 Mol Hydroxyethylmethacrylat | — | — | 50 | 50 |
| Hydroxyethylmethacrylat | 47 | — | 48 | — |
| Triethylenglykoldimethacrylat | — | 48 | — | 47 |
| p-Toluolsulfonsäurehydrazid | 1 | — | — | 1 |
| Benzoesäuresulfimid | 1 | 1 | 1 | 1 |
| N,N-Dimethyl-p-toluidin | 1 | 1 | 1 | 1 |
| Peressigsäure (40%ig in Essigsäure) | 1 | 1 | 1 | 1 |

In der nachfolgenden Tabelle 8 sind in Abhängigkeit von den Nummern der Beispiele die Aushärtezeit bis zum Erreichen der Handfestigkeit und die nach 1 beziehungsweise 24 Stunden gefundenen Drehmomente wiedergegeben.

Tabelle 8

| | Nummer der Beispiele 14 | 15 | 16 | 17 |
|---|---|---|---|---|
| Aushärtezeit (min) | 1 | 2 | 3 | 1 |
| 1 Stunde (Nm) | 30 | 20 | 15 | 32 |
| 24 Stunden (Nm) | 60 | 55 | 50 | 60 |

**Patentansprüche**

1. Lagerstabile, bei Ausschluß von Sauerstoff beschleunigt erhärtende, von Peroxiden und Hydroperoxiden freie Systeme auf Basis von Estern der Methacrylsäure und Acrylsäure, gekennzeichnet durch einen Gehalt an

a) 0,2 bis 10 Gewichtsteilen wenigstens einer HN-aciden Verbindung,
b) 0,2 bis 5 Gewichtsteilen eines tertiären Amins und/oder verschiedener tertiären Amine, die wenigstens einmal einen aromatischen Ring am Stickstoff haben, sowie
c) 0,1 bis 5 Gewichtsteilen einer organischen Percarbonsäure

jeweils bezogen auf 100 Gewichtsteile des polymerisierbaren Materials.

2. Lagerstabile, bei Ausschluß von Sauerstoff erhärtende Systeme nach Anspruch 1, dadurch gekennzeichnet, daß sie als Percarbonsäuren solche aus der Gruppe Peressigsäure, Perpropionsäure, Perameisensäure, Perbenzoesäure und Chlorperbenzoesäure enthalten.

3. Lagerstabile, bei Ausschluß von Sauerstoff erhärtende Systeme nach Ansprüchen 1 bis 2, dadurch gekennzeichnet, daß sie als HN-acide Verbindungen solche aus der Gruppe Sulfonsäurehydrazide, Carbonsäurehydrazide, Sulfimide, Disulfonylimide und Acylcyanamide enthalten.

## Claims

1. Storable, peroxide- and hydroperoxide-free systems based on methacrylates and acrylates which harden rapidly in the absence of oxygen, characterized by a content of

a) from 0.2 to 10 parts by weight of at least one HN-acid compound,
b) from 0.2 to 5 parts by weight of a tertiary amine and/or various tertiary amines which have an aromatic ring at least once on the nitrogen and
c) from 0.1 to 5 parts by weight of an organic percarboxylic acid,

based in each case on 100 parts by weight of the polymerizable material.

2. Storable systems hardening in the absence of oxygen as claimed in Claim 1, characterized in that they contain as percarboxylic acids those from the group comprising peracetic acid, perpropionic acid, performic acid, perbenzoic acid and chlorperbenzoic acid.

3. Storable systems hardening in the absence of oxygen as claimed in Claims 1 and 2, characterized in that they contain as HN-acid compounds those from the group comprising sulfonic acid hydrazides, carboxylic acid hydrazides, sulfimides, disulfonyl imides and acyl cyanamides.

## Revendications

1. Systèmes stables au stockage, à durcissement accéléré à l'abri de l'oxygène et exempts de peroxydes et d'hydroperoxydes, à base d'esters de l'acide méthacrylique et de l'acide acrylique, caractérisés par une teneur de

a) 0,2 à 10 parties en poids d'au moins un composé HN-acide,
b) 0,2 à 5 parties en poids d'une amine tertiaire et/ou de différentes amines tertiaires qui comportent au moins une fois un noyau aromatique sur l'azote de même que
c) 0,1 à 5 parties en poids d'un peracide carboxylique organique

chaque fois pour 100 parties en poids de la matière polymérisée.

2. Systèmes stables au stockage, durcissant à l'abri de l'oxygène, selon la revendication 1, caractérisés en ce qu'ils contiennent comme peracides carboxyliques ceux du groupe de l'acide peracétique, de l'acide perpropionique, de l'acide performique, de l'acide perbenzoïque et de l'acide chloroperbenzoïque.

3. Systèmes stables au stockage, durcissant à l'abri de l'oxygène, selon les revendications 1 et 2, caractérisés en ce qu'ils contiennent des sulfimides, disulfonylimides et acylcyanamides.